# FASCICULE DE BREVET EUROPEEN

(11) **EP 2 109 794 B1**
(45) Date de publication et mention de la délivrance du brevet: **25.01.2017**
(21) Numéro de dépôt: 07858134.5
(22) Date de dépôt: 24.12.2007
(51) Int. Cl.: G02B 27/09, G02B 17/08

(54) **SYSTEME OPTIQUE DE TRAITEMENT D'UN FAISCEAU LUMINEUX**
OPTISCHES SYSTEM ZUM VERARBEITEN EINES LICHTSTRAHLS
OPTICAL SYSTEM FOR PROCESSING A LIGHT BEAM

(30) Priorité: 28.12.2006 FR 0656020
(43) Date de publication de la demande: 21.10.2009
(73) Titulaire: Commissariat à l'Énergie Atomique et aux Énergies Alternatives, 75015 Paris (FR)
(72) Inventeur: JOURNOT, Eric, F-33650 Saint Selve (FR)
(74) Mandataire: Ilgart, Jean-Christophe
(86) Numéro de dépôt international: PCT/EP2007/064536
(87) Numéro de publication internationale: WO 2008/080916

(56) Documents cités:
- EP-A- 0 721 113
- EP-A1- 0 240 194
- FR-A1- 2 157 738
- JP-A- 11 032 278
- US-A- 5 040 886

## Description

### DOMAINE TECHNIQUE

La présente invention concerne un système optique de traitement d'un faisceau lumineux.

Plus particulièrement, l'invention concerne l'optimisation de l'imagerie parasite d'une lentille pour l'analyse d'un faisceau laser.

L'invention s'applique notamment au domaine des lasers de puissance de grandes dimensions, lasers dont les faisceaux ont des diamètres supérieurs à 1 cm, et permet de concevoir un système d'analyse de faisceau, qui est compact et peu coûteux.

La connaissance complète d'un faisceau laser impose de mesurer la répartition spatiale de l'énergie et de la phase du faisceau dans un plan donné. Lorsque les dimensions de ce faisceau sont importantes par rapport à la taille des capteurs de type CCD, il est nécessaire de réduire la dimension transversale du faisceau en altérant le moins possible ce dernier.

Dans le cas d'un faisceau laser, il est de plus indispensable de réduire très fortement l'énergie du faisceau à analyser.

Indiquons dès à présent que la présente invention permet de concevoir un système de réduction de faisceau qui est très compact et de bonne qualité et présente une faible transmission, et ce pour des faisceaux de dimensions transverses quelconques.

L'invention apparaît de plus en plus pertinente avec l'augmentation de la dimension et de l'énergie des faisceaux lasers.

### ÉTAT DE LA TECHNIQUE ANTÉRIEURE

Pour réduire la dimension d'un faisceau laser sans altération de ce dernier, de nombreux systèmes optiques du genre des expanseurs de faisceaux (en anglais, *beam expanders*) ont été développés, voir par exemple EP0240194

Ces systèmes sont des lunettes de type galiléen (comportant un groupe optique d'entrée, ou groupe primaire, et un groupe optique de sortie, ou groupe secondaire) pour éviter tout risque de claquage au niveau d'un foyer, ou des télescopes hors d'axe (en anglais, *off axis),* sans obscuration centrale.

Ces systèmes connus fonctionnent bien mais sont encombrants et coûteux lorsque la dimension du faisceau augmente.

En effet, dans les systèmes connus de type galiléen, le groupe optique d'entrée comporte plusieurs lentilles et doit être peu ouvert - l'ouverture f/# de ce groupe doit être typiquement supérieure à 4 - pour ne générer aucune aberration. Le coût du groupe optique d'entrée augmente ainsi très vite si le diamètre du faisceau dépasse 5 cm.

En outre, l'alignement d'un télescope hors d'axe est très délicat.

### EXPOSÉ DE L'INVENTION

La présente invention a pour objet un système optique de traitement d'un faisceau lumineux, en particulier un système utilisable pour l'analyse d'un faisceau laser, ce système étant plus simple que les systèmes de type galiléen mentionnés plus haut.

De façon précise, la présente invention a pour objet un système optique de traitement d'un faisceau lumineux, ce système optique étant défini par la revendication 1.

La puissance de la lentille pour le faisceau d'ordre 0 est de préférence inférieure à la puissance de la lentille pour le faisceau d'ordre 2.

De préférence, le deuxième moyen optique est prévu pour collimater le faisceau d'ordre 2 et pour faire diverger le faisceau d'ordre 0.

Selon un mode de réalisation préféré de l'invention, le système optique comprend en outre un moyen optique afocal, prévu pour focaliser le faisceau d'ordre 2 et éliminer le faisceau d'ordre 0.

Ce moyen optique afocal peut comprendre des troisième et quatrième moyens optiques qui sont respectivement convergent et convergent et ont un foyer commun, et un diaphragme qui est placé en ce foyer commun.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue en coupe schématique d'un mode de réalisation particulier du système optique, objet de l'invention, et
- la figure 2 est une vue en coupe schématique d'une lentille conforme à l'invention.

### EXPOSÉ DÉTAILLÉ DE MODES DE RÉALISATION PARTICULIERS

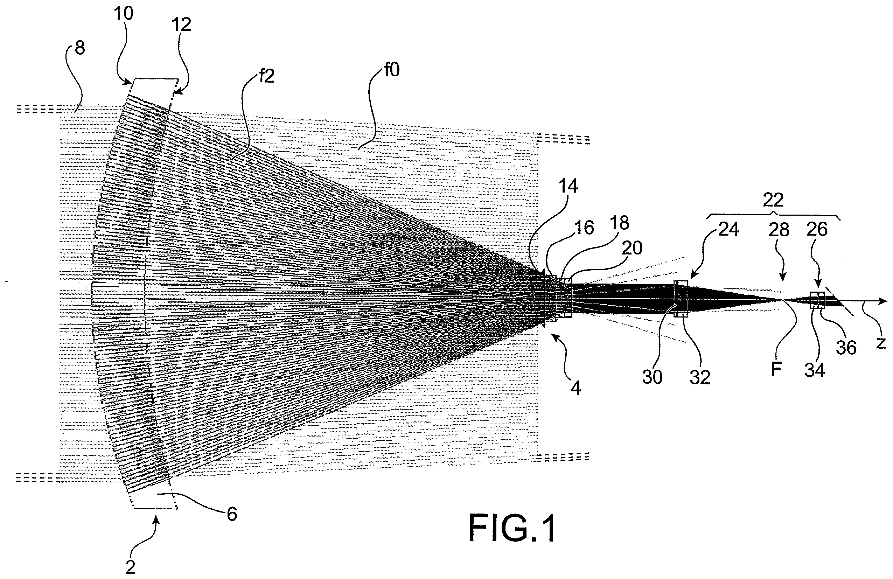

Le système optique de type galiléen conforme à l'invention, qui est schématiquement représenté sur la figure 1, comprend un premier moyen optique convergent 2, ou groupe primaire, et un deuxième moyen optique divergent 4, ou groupe secondaire, dont l'axe optique commun a la référence Z sur la figure.

Conformément à l'invention, le groupe primaire 2 est le plus simple possible : il se réduit à une seule lentille convergente 6.

Le système est destiné à traiter un faisceau lumineux monochromatique incident 8, par exemple pour analyser ce faisceau afin de déterminer les répartitions spatiales respectives de l'énergie et de la phase du faisceau dans un plan donné.

A partir de ce faisceau 8, la lentille 6 fournit un faisceau d'ordre 0, ou image d'ordre 0, qui a la référence f0 sur la figure, et un faisceau d'ordre 2, ou image d'ordre 2, qui a la référence f2. Ce faisceau d'ordre 2 résulte de deux réflexions du faisceau incident 8 sur les faces d'entrée et de sortie 10 et 12 de la lentille 6, à savoir une réflexion sur la face de sortie 12 puis une réflexion sur la face d'entrée 10 qui reçoit la première le faisceau 8.

Pour garantir une bonne qualité optique et un système compact, on optimise la lentille 6 pour son image d'ordre 2, qui est considérée comme parasite dans l'art antérieur, et non pas pour son image d'ordre 0 comme cela se fait dans l'art antérieur.

On dispose ainsi de quatre dioptres pour optimiser la qualité du groupe primaire, étant donné que chaque face de la lentille est vue deux fois par le faisceau 8.

Cette optimisation consiste à calculer les rayons de courbure des faces 10 et 12 de la lentille 6 pour que, vis-à-vis du faisceau d'ordre 2, cette lentille ait une ouverture f/# inférieure à 4, avec une qualité de front d'onde inférieure à λ PV, où PV signifie « pic à vallée » (en anglais, « *peak to valley* ») et λ représente la longueur d'onde du faisceau incident monochromatique.

On optimise par exemple le groupe primaire 2 pour que son ouverture f/# vaille typiquement 1,3 et que la qualité de front d'onde soit inférieure à λ/2 PV.

La transmission du groupe primaire 2 varie de 0,01% à 5,25% selon les traitements appliqués sur les faces 10 et 12 de la lentille 6, ce qui participe activement à l'atténuation nécessaire du faisceau 8 sans nuire à la qualité de ce dernier.

La lentille obtenue a une puissance (inverse de la distance focale de la lentille) qui est très faible pour l'image classique d'ordre 0 et très forte pour l'image d'ordre 2. On utilise la différence de convergence des faisceaux d'ordre 0 et 2 pour supprimer le faisceau d'ordre 0.

Comme dans un système classique, tous les autres composants optiques du système de la figure 1 sont traités anti-reflet à la longueur d'onde d'utilisation, c'est-à-dire la longueur d'onde du faisceau incident 8.

Le groupe optique secondaire 4, dont l'association avec le groupe primaire 2 forme un système afocal, collimate le faisceau d'ordre 2 tout en faisant diverger fortement le faisceau d'ordre 0.

Dans l'exemple, l'association des groupes 2 et 4 d'ordre 2 forme un système galiléen dont le grossissement G est inférieur à 20 en valeur absolue, pour des raisons pratiques de mise en oeuvre.

Dans l'exemple de la figure 1, le groupe secondaire 4 se compose successivement d'une lentille convergente 14 et de trois lentilles divergentes 16, 18 et 20 qui ont le même axe optique, à savoir l'axe Z.

Le système représenté sur la figure 1 comprend également un dispositif afocal 22 dont le grossissement est voisin de -1 pour éliminer totalement le faisceau d'ordre 0, résoudre les problèmes d'imagerie pupillaire et éventuellement ajuster la dimension du faisceau issu du système au capteur CCD (non représenté) qui est destiné à analyser ce faisceau.

Dans l'exemple, ce dispositif afocal 22 comprend :
- un troisième groupe optique 24 et un quatrième groupe optique 26, qui ont un axe optique commun, à savoir l'axe Z, et un foyer commun F, situé entre ces groupes 24 et 26, sur l'axe Z, et
- un diaphragme 28 qui est placé en ce foyer F.

Chacun des groupes 24 et 26 peut être constitué de deux lentilles ou de deux doublets. Dans l'exemple, le groupe 24 comprend successivement une lentille convergente 30 et une lentille divergente 32, et le groupe 26 comprend successivement une lentille divergente 34 et une lentille convergente 36, comme on le voit sur la figure 1.

L'ensemble constitué par les groupes 24 et 26 et par le diaphragme 28 constitue un filtre spatial dans lequel le troisième groupe 24 a pour fonction de focaliser le faisceau d'ordre 2 et d'éliminer totalement le faisceau d'ordre 0, et le quatrième groupe 26 a pour fonction de recollimater le faisceau d'ordre 2.

L'utilisation de la double réflexion dans la lentille du groupe primaire permet de concevoir un système de prélèvement qui est trois à quatre fois plus compact qu'un système afocal classique tout en ayant la même qualité optique que ce dernier.

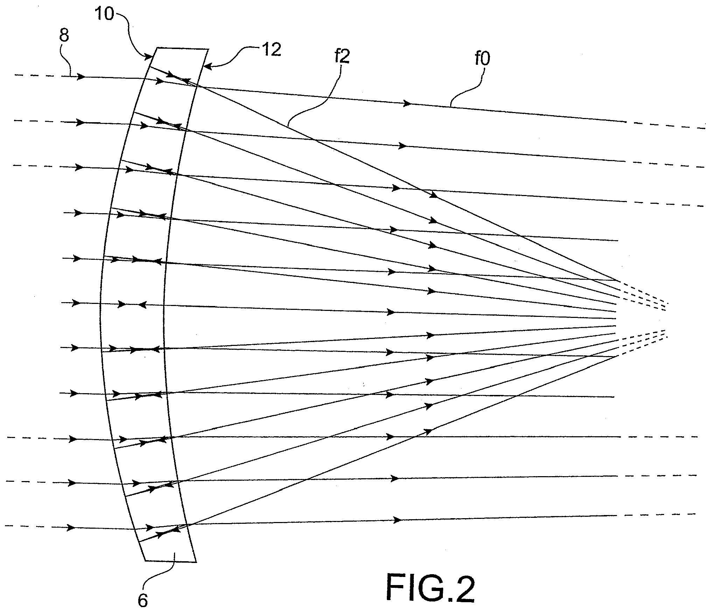

L'originalité de la présente invention réside dans l'utilisation de la réflexion parasite dans une lentille 6 (figure 2) pour réaliser un composant très ouvert et de bonne qualité optique.

Conformément à l'invention, étant donné un faisceau incident 8, cette lentille est optimisée pour le faisceau d'ordre 2 (référence f2), qui se réfléchit sur la face de sortie 12 et la face d'entrée 10 de la lentille, et non pas pour le faisceau d'ordre 0 (référence f0), qui est réfracté par les dioptres correspondant respectivement à ces deux faces.

Par rapport à la conception classique d'un système afocal, la solution utilisée dans la présente invention est plus avantageuse, en termes de coût et d'intégration, pour un faisceau laser dont le diamètre est supérieur à 50mm.

Il convient en outre de noter que, dans la présente invention, on inverse les notions de signal utile et de signal parasite.

En effet, de manière classique, on cherche toujours à éliminer les réflexions parasites dans un système optique alors que, dans la présente invention, on tire partie de ce phénomène pour réaliser un système plus performant que la conception classique.

Un système optique conforme à l'invention peut être par exemple mis en oeuvre
- avec un faisceau lumineux dont la diagonale vaut 70mm, en utilisant un ensemble de groupes primaire-secondaire 2-4, ayant un grossissement égal à -13, et un dispositif afocal 22 ayant un grossissement égal à -1,
- ou avec un faisceau lumineux dont la diagonale vaut 560 mm, en utilisant un ensemble de groupes primaire-secondaire 2-4, ayant un grossissement égal à -13, et un dispositif afocal ayant un grossissement égal à -3.

## Revendications

1. Système optique de traitement d'un faisceau lumineux, ce système optique comprenant des premier et deuxième moyens optiques (2, 4) qui sont respectivement convergent et divergent, le premier moyen optique (2) consistant en une unique lentille convergente (6) ayant deux faces (10,12), ce système optique étant **caractérisé en ce que** cette lentille convergente (6) fournit un faisceau d'ordre 0 et un faisceau d'ordre 2 qui résultent de la traversée de cette lentille par le faisceau lumineux à traiter après que ce dernier a subi respectivement 0 réflexion et 2 réflexions sur les faces (10, 12) de la lentille, les premier et deuxième moyens optiques formant un dispositif optique afocal pour le faisceau d'ordre 2, et les rayons de courbure des faces (10,12) de la lentille (6) sont optimisés pour le faisceau d'ordre 2 pour que cette lentille (6) ait, vis-à-vis de ce dernier, une ouverture f/# inférieure à 4, avec une qualité de front d'onde inférieure à λ pic-à-vallée, où λ est la longueur d'onde du faisceau lumineux à traiter.

2. Système optique selon la revendication 1, dans lequel la puissance de la lentille pour le faisceau d'ordre 0 est inférieure à la puissance de la lentille pour le faisceau d'ordre 2.

3. Système optique selon la revendication 2, dans lequel le deuxième moyen optique (4) est prévu pour collimater le faisceau d'ordre 2 et pour faire diverger le faisceau d'ordre 0.

4. Système optique selon la revendication 3, comprenant en outre un moyen optique afocal (22), prévu pour focaliser le faisceau d'ordre 2 et éliminer le faisceau d'ordre 0.

5. Système optique selon la revendication 4, dans lequel le moyen optique afocal (22) comprend des troisième et quatrième moyens optiques (24, 26) qui sont respectivement convergent et convergent et ont un foyer commun (F), et un diaphragme (28) qui est placé en ce foyer commun.

## Patentansprüche

1. Optisches System zum Behandeln eines Lichtstrahls, wobei das optische System erste und zweite optische Mittel (2, 4) umfasst, welche konvergent bzw. divergent sind, wobei das erste optische Mittel (2) aus einer einzelnen Sammellinse (6) besteht, welche zwei Flächen (10, 12) aufweist, das optische System **dadurch gekennzeichnet, dass** die Sammellinse (6) einen Strahl der Ordnung 0 und einen Strahl der Ordnung 2 liefert, welche durch den Durchgang des zu behandelnden Lichtstrahls durch die Linse entstehen, nachdem letzterer 0 Reflexionen bzw. 2 Reflexionen an den Flächen (10, 12) der Linse erfahren hat, wobei die ersten und zweiten optischen Mittel eine afokale optische Vorrichtung für den Strahl der Ordnung 2 bilden und die Krümmungsradien der Flächen (10, 12) der Linse (6) für den Strahl der Ordnung 2 optimiert sind, so dass die Linse (6) bezüglich letzterem eine Öffnung f/# kleiner als 4 aufweist, mit einer Wellenfront-Qualität kleiner als λ Spitze-zu-Tal, wobei λ die Wellenlänge des zu behandelnden Lichtstrahls ist.

2. Optisches System nach Anspruch 1, wobei die Brechkraft der Linse für den Strahl der Ordnung 0 kleiner ist als die Brechkraft der Linse für den Strahl der Ordnung 2.

3. Optisches System nach Anspruch 2, wobei das zweite optische Mittel (4) dazu vorgesehen ist, den Strahl der Ordnung 2 zu kollimieren und den Strahl der Ordnung 0 zu divergieren.

4. Optisches System nach Anspruch 3, ferner umfassend ein afokales optisches Mittel (22), welches dazu vorgesehen ist, den Strahl der Ordnung 2 zu fokussieren und den Strahl der Ordnung 0 auszulöschen.

5. Optisches System nach Anspruch 4, wobei das afokale optische Mittel (22) dritte und vierte optische Mittel (24, 26) umfasst, welche jeweils konvergent und konvergent sind und einen gemeinsamen Brennpunkt (F) aufweisen, sowie ein Diaphragma (28), welches in dem gemeinsamen Brennpunkt angeordnet ist.

## Claims

1. Optical system for processing a light beam, this optical system comprising first and second optical means (2, 4) that are convergent and divergent respectively, the first optical means (2) consisting of a single convergent lens (6) having two faces (10, 12), this optical system being **characterised in that** this convergent lens (6) provides an order 0 beam and an order 2 beam resulting from the light beam to be processed passing through this lens after having been subjected to a 0 reflection and 2 reflections respectively on the lens faces (10, 12), the first and second optical means forming an afocal optical device for the order 2 beam, and the radii of curvature of the lens faces (10, 12) are optimised for the order 2 beam so that this lens (6) has an aperture f/# less than 4 for this order 2 beam, with a wave front quality less than λ peak-to-valley, where λ is the wavelength of the light beam to be processed.

2. Optical system according to claim 1, in which the power of the lens for the order 0 beam is less than the power of the lens for the order 2 beam.

3. Optical system according to claim 2, in which the second optical means (4) is designed to collimate the order 2 beam and to make the order 0 beam diverge.

4. Optical system according to claim 3, also comprising an afocal optical means (22), designed to focus the order 2 beam and eliminate the order 0 beam.

5. Optical system according to claim 4, in which the afocal optical means (22) comprises third and fourth optical means (24, 26) that are convergent and convergent respectively and have a common focus (F), and a diaphragm (28) that is placed at this common focus.
